# EUROPÄISCHE PATENTSCHRIFT

(11) **EP 3 424 780 B1**
(45) Veröffentlichungstag und Bekanntmachung des Hinweises auf die Patenterteilung: **05.08.2020**
(21) Anmeldenummer: 18176933.2
(22) Anmeldetag: 11.06.2018
(51) Int. Cl.: B60R 7/00, B60R 9/06, B65G 1/127, B60P 3/00

(54) **FAHRZEUG, INSBESONDERE OMNIBUS, MIT EINER GEPÄCKAUFBEWAHRUNGSVORRICHTUNG**
VEHICLE, ESPECIALLY OMNIBUS, WITH A LUGGAGE STORAGE DEVICE
VÉHICULE, EN PARTICULIER AUTOBUS DOTÉ D'UN DISPOSITIF DE CONSIGNE DES BAGAGES

(30) Priorität: 05.07.2017 DE 102017115033
(43) Veröffentlichungstag der Anmeldung: 09.01.2019
(73) Patentinhaber: MAN Truck & Bus SE, 80995 München (DE)
(72) Erfinder: Wilkens, Jean-Marc, 8055 Seiersberg-Pirka (AT); Gaedtke, Sven, 85221 Dachau (DE); Landsherr, Thomas, 80995 München (DE); Elbs, Norbert, verstorben (DE); Schönherr, Stephan, 86153 Augsburg (DE)
(74) Vertreter: v. Bezold & Partner Patentanwälte - PartG mbB

(56) Entgegenhaltungen:
- EP-A2- 1 262 364
- DE-A1-102004 063 138
- DE-C1- 4 409 562
- FR-A1- 2 746 068

## Beschreibung

Die Erfindung betrifft einen Omnibus mit einer Gepäckaufbewahrungsvorrichtung.

Bekannte Gepäckräume bei Omnibussen werden von einer Abdeckklappe in der Seitenwand begrenzt, hinter der sich ein wegen der Breite des Omnibusses tiefer und schwer zugänglicher Raum für die Aufnahme der Gepäckstücke befindet. Dieser wird typischerweise nach unten hin vom Bodenblech des Fahrzeugs und nach oben hin durch das Bodenblech des Passagierraums begrenzt. In einem derartigen Gepäckraum werden insbesondere bei Reisebussen eine Vielzahl von Gepäckstücken verschiedener Größe und Art zum Teil übereinandergestapelt und oftmals ohne erkennbare Ordnung eingebracht. Dadurch kann einerseits der verfügbare Laderaum möglichst effizient ausgenutzt werden.

Dies führt andererseits aber zu einer Reihe von Nachteilen: Aufgrund der geringen Bauhöhe und der großen Tiefe eines solchen Gepäckraumes sind die Gepäckstücke aus diesem generell schwer entnehmbar. Ferner ist oftmals nicht erkennbar, an welcher Stelle im Gepäckraum die Gepäckstücke eines bestimmten Passagiers gelagert sind, so dass beispielsweise bei Zwischenstopps das Gepäck von aussteigenden Passagieren oftmals erst zeitaufwändig durch Ausladen (und nachfolgendes Wiedereinladen) einer Vielzahl weiterer Gepäckstücke lokalisiert und entladen werden kann. Ein weiteres aus der Praxis bekanntes Problem ist, dass beim Ausladen des Gepäckraums die Gepäckstücke ohne erkennbare Ordnung ausgeladen und auf der Straße abgestellt werden. Passagiere müssen dann inmitten weiterer herumlaufender Passagiere und ggf. weiterer Passanten in dem unübersichtlichen Stapel von Gepäckstücken zeitaufwändig ihre eigenen Gepäckstücke finden. In derartigen unübersichtlichen Situationen kann es zu Verwechslungen von Gepäckstücken kommen. Dies kann ferner zu zusätzlichem Stress und Sicherheitsbedenken bei den Passagieren führen. Bei gängigen Gepäckräumen von Omnibussen sind die gestapelten Gepäckstücke den Querbeschleunigungen und Längsbeschleunigungen des Fahrzeugs während der Fahrt unvermindert ausgesetzt, so dass es insbesondere bei nur teilbeladenen, nicht sorgfältig beladenen Gepäckräumen vorkommen kann, dass einzelne Gepäckstücke durch den Gepäckraum "fliegen". Dadurch können Beschädigungen nicht ausgeschlossen werden. Ferner kann sich ein Gepäckstück am Ende der Fahrt in einem ganz anderen Bereich im Gepäckraum befinden als bei Beginn der Fahrt, was wiederum ein schnelles Lokalisieren und Entladen eines Gepäckstücks erschweren kann.

Das Dokument EP 1 262 364 A2 beschreibt ein Fahrzeug mit einem in einem Nutzraum des Fahrzeugs befindlichen Schrank mit mehreren Fächern zum Unterbringen von Gegenständen. Um einen verbesserten Schrank zu schaffen, dessen Fächer besser zugänglich sind, schlägt das Dokument EP 1 262 364 A2 vor, die Fächer in dem Schrank an einer endlosen Umlaufeinrichtung anzuordnen.

Es ist somit eine Aufgabe der Erfindung, eine Gepäckaufbewahrungsvorrichtung für ein Fahrzeug bereitzustellen, mit der Nachteile herkömmlicher Gepäckaufbewahrungsvorrichtungen, wie z. B. herkömmlicher Gepäckräume, vermieden werden können. Die Aufgabe der Erfindung ist es insbesondere eine Gepäckaufbewahrungsvorrichtung für ein Fahrzeug, insbesondere für einen Omnibus bereitzustellen, die leicht zu be- und entladen ist und womit eine sichere Unterbringung von Gepäckstücken ermöglicht wird.

Diese Aufgaben werden durch eine Gepäckaufbewahrungsvorrichtung und einen Omnibus mit den Merkmalen des unabhängigen Anspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß allgemeinen Gesichtspunkten der Erfindung wird ein Fahrzeug mit einer Gepäckaufbewahrungsvorrichtung bereitgestellt, die als Umlauf-Lift bzw. Umlauf-Aufzug ausgeführt ist, mit mehreren entlang einer Umlaufbahn geführten Behältern, nachfolgend als Gepäckaufnahmebehälter bezeichnet. Mit anderen Worten arbeitet die Gepäckaufbewahrungsvorrichtung nach dem Paternoster-Prinzip.

Erfindungsgemäß ist das Fahrzeug ein Omnibus.

Auf diese Weise kann das Entladen von Gepäckstücken bei einem Omnibus vereinfacht werden. Um ein bestimmtes Gepäckstück zu entladen, muss lediglich der das Gepäckstück enthaltene Gepäckaufnahmebehälter zur Entladeposition verfahren werden, an der dann anschließend das gewünschte Gepäckstück diesem entnommen werden kann. Das mühsame Ausladen weiterer Gepäckstücke aus einem tiefen und schwer zugänglichen herkömmlichen Gepäckraum, wobei oftmals zuvor weitere Gepäckstücke ausgeladen oder beiseite geschafft werden müssen, um Zugriff auf ein bestimmtes Gepäckstück zu erhalten, kann vermieden werden.

Die Gepäckaufbewahrungsvorrichtung kann mindestens ein endloses, umlaufendes Fördermittel aufweisen, mit welchem die Gepäckaufnahmebehälter entlang der Umlaufbahn geführt sind. Die Gepäckaufnahmebehälter können hierbei im Wesentlichen stets aufrecht stehend geführt sein. Dies ist vergleichbar zu einem Paternoster-Aufzug, bei dem die Aufzugskabinen ebenfalls im Wesentlichen stets aufrecht stehend geführt sind. Das endlos umlaufende Fördermittel kann als Riemen, beispielsweise als Zahn- oder Keilriemen ausgeführt sein. Das Fördermittel kann ferner als Band, Seil oder Kette ausgeführt sein. Der Umlauf-Lift ist vorzugsweise elektrisch angetrieben.

Gemäß einer vorteilhaften Ausführungsform kann die Gepäckaufbewahrungsvorrichtung Gepäckaufnahmebehälter unterschiedlicher Größe aufweisen, um möglichst flexibel mit Gepäckstücken unterschiedlicher Größe beladen werden zu können. Die Gepäckaufnahmebehälter der Gepäckaufbewahrungsvorrichtung können jedoch auch alle die gleiche Größe aufweisen.

Die Gepäckaufnahmebehälter können schwenkbar an dem Fördermittel aufgehängt sein und/oder als Transportgondeln ausgeführt sein. Die Gepäckaufnahmebehälter können kastenförmig und/oder als Verstauboxen ausgeführt sein.

Gemäß einer besonders bevorzugten Ausführungsform können die Gepäckaufnahmebehälter verschließbar ausgeführt sein. Dies stellt sicher, dass die darin untergebrachten Gepäckstücke nicht während der Fahrt herausfallen können. Die Gepäckaufnahmebehälter können zum Verschließen einen Rollladen oder einen Jalousieverschluss aufweisen, beispielsweise hergestellt aus einem Aluminium-Werkstoff. Auf diese Weise kann ein platzsparender, einfach zu handhabender Verschließmechanismus bereitgestellt werden.

Gemäß einer weiteren vorteilhaften Ausführungsform ist die Umlaufbahn und/oder sind die Gepäckaufnahmebehälter im Bereich einer Längsseitenwand des Fahrzeugs mindestens teilweise im Wesentlichen vertikal geführt. Auf diese Weise kann die vertikale Position des zu entladenen oder zu beladenen Gepäckaufnahmebehälters und damit dessen Be- bzw. Entladehöhe leicht angepasst werden.

Die Umlaufbahn kann U-förmig oder umgekehrt U-förmig ausgebildet sein. Dies bedeutet, dass die Umlaufbahn, entlang derer die Gepäckaufnahmebehälter verfahren werden können, zwei äußere Abschnitte aufweist, auf denen die Gepäckaufnahmebehälter in Vertikalrichtung geführt sind und zwei innere Abschnitte aufweist, die im Vergleich zu den äußeren Abschnitten kürzer sind und auf denen die Gepäckaufnahmebehälter ebenfalls in Vertikalrichtung geführt sind. Bei einem vollständigen Durchlauf werden die Gepäckaufnahmebehälter somit entlang einer U-förmigen oder umgekehrt U-förmigen Kontur verfahren. Bei der Ausgestaltung des Umlauf-Lifts mit U-förmiger oder umgekehrt U-förmiger Umlaufbahn können mehr Gepäckaufnahmebehälter auf gleichem Raum transportiert werden, als bei einer Ausführung, bei der die Umlaufbahn z. B. die Form eines abgerundeten Rechtecks aufweist.

Gemäß einer weiteren bevorzugten Ausführungsform umfasst die Gepäckaufbewahrungsvorrichtung zwei Umlauf-Lifte mit jeweils mehreren entlang einer Umlaufbahn geführten Gepäckaufnahmebehältern. Die zwei Umlauf-Lifte können in Fahrzeuglängsrichtung hintereinander angeordnet sein. Die Gepäckaufbewahrungsvorrichtung kann hierbei ausgeführt sein, dass die beiden Umlauflifte unabhängig voneinander betreibbar sind oder nur synchron zueinander.

Die Gepäckaufbewahrungsvorrichtung kann eine erste Gruppe von entlang einer ersten Umlaufbahn geführten Gepäckaufnahmebehältern und eine zweite Gruppe von entlang einer zweiten Umlaufbahn geführten Gepäckaufnahmebehältern aufweisen. Die erste Umlaufbahn ist vorzugsweise zur zweiten Umlaufbahn in Fahrzeuglängsrichtung verschoben, insbesondere parallelverschoben. Die Gepäckaufnahmebehälter der ersten Gruppe werden dabei von mindestens einem ersten umlaufenden Fördermittel angetrieben und die Gepäckaufnahmebehälter der zweiten Gruppe werden dabei von mindestens einem zweiten umlaufenden Fördermittel angetrieben. Die Gepäckaufnahmebehälter der ersten Gruppe können jeweils an einem Gepäckaufnahmebehälter der zweiten Gruppe befestigt sein, so dass sich die Gepäckaufnahmebehälter der ersten Gruppe und der zweiten Gruppe synchron bzw. gleichzeitig bewegen.

Vorstehend wurde bereits festgestellt, dass das Fahrzeug ein Omnibus ist. Hierbei ist es besonders vorteilhaft, die Gepäckaufbewahrungsvorrichtung an bzw. in einem hinteren Endbereich des Omnibusses anzuordnen. Vorzugsweise erstreckt sich die Aufbewahrungsvorrichtung in diesem Bereich über die ganze oder zumindest über mehr als 70 % der Bauhöhe der Fahrzeugkarosserie.

Gemäß einer ersten erfindungsgemäßen Variante ist die Gepäckaufbewahrungsvorrichtung in Längsrichtung des Omnibusses verfahrbar ausgeführt. Gemäß dieser Variante ist die Gepäckaufbewahrungsvorrichtung ausgebildet, zum Be- und Entladen mit Gepäckstücken aus dem hinteren Endbereich der Karosserie ausgefahren zu werden. Hierzu kann die Gepäckaufbewahrungsvorrichtung mittels eines Halterahmens auf einer Führungsmechanik gehaltert sein, entlang derer die Gepäckaufbewahrungsvorrichtung über einen elektrischen Antrieb in Längsrichtung des Omnibusses ein- und ausfahrbar ist. Eine kostengünstigere zweite nicht-ausfahrbare erfindungsgemäße Variante sieht vor, dass an einer Längsseitenwand des Omnibusses im Bereich der Gepäckaufbewahrungsvorrichtung eine Abdeckeinrichtung vorgesehen ist, die in einen geöffneten Zustand und einen verschlossenen Zustand bringbar ist und die im geöffnetem Zustand den Zugang zu einem Teil der Gepäckaufnahmebehälter der Gepäckaufbewahrungsvorrichtung freigibt. Die Abdeckeinrichtung kann beispielsweise als eine verschwenkbare oder aufklappbare Abdeckplatte ausgeführt sein. Vorzugsweise ist die Abdeckeinrichtung auf der Beifahrerseite angeordnet, so dass ein Be- und Entladen bei einem am Fahrbahnrand geparkten Fahrzeug von der Gehsteigseite aus möglich ist. Alternativ oder zusätzlich kann die Abdeckeinrichtung auch auf der Fahrerseite angeordnet sein.

Gemäß einem weiteren Aspekt können alle oder zumindest ein Teil der Gepäckaufnahmebehälter eine Beschriftung aufweisen, die eine Zuordnung des Gepäckaufnahmebehälters zu einem Sitzplatz, einer Sitzplatzgruppe, einem Zielort und/oder einem Passagier ermöglicht.

Werden die Gepäckaufnahmebehälter somit korrespondierend zu dieser Beschriftung beladen, ist jeder Gepäckaufnahmebehälter einem bestimmten Passagier bzw. Sitzplatz zugeordnet. Auf diese Weise kann das Gepäck eines bestimmten Passagiers im Gepäckraum besonders schnell lokalisiert und entladen werden, was ferner insbesondere besonders vorteilhaft ist, falls Passagiere bei Zwischenstopps den Reisebus verlassen und ihr Gepäck benötigen.

Alternativ oder zusätzlich können alle oder zumindest ein Teil der Gepäckaufnahmebehälter eine Beschriftung aufweisen, die eine Zuordnung des Gepäckaufnahmebehälters zu einem Zielort aufweist. Dies ist besonders vorteilhaft, wenn der Omnibus als Reisebus eingesetzt wird, der Reiserouten mit Zwischenstopps bedient, bei denen Passagiere den Reisebus verlassen. Bei dieser Variante können die Gepäckstücke gruppiert nach Reisezielen und korrespondierend zu der entsprechenden Beschriftung der Gepäckaufnahmebehälter eingeladen werden. An einem Zwischenstopp können dann der oder die Gepäckaufnahmebehälter, die über die Beschriftung als der oder die Gepäckaufnahmebehälter für diesen Zwischenstopp gekennzeichnet sind, mittels des Umlauf-Lifts bis zur Entladeposition verfahren werden, so dass die Gepäckstücke der Passagiere, die an diesem Zwischenstopp aussteigen, schnell lokalisiert und entladen werden können.

Die Beschriftung kann z. B. eine alphanumerische Codierung und/oder Bezeichnung eines Sitzplatzes, einer Sitzplatzgruppe, eines Zielorts und/oder eines Passagiernamens enthalten. Unter einer Beschriftung, die eine Zuordnung zu einem Sitzplatz, einer Sitzplatzgruppe, einem Zielort und/oder einem Passagier ermöglicht, wird eine Beschriftung verstanden, die diese Zuordnung direkt angibt oder aus der diese Zuordnung ableitbar ist.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Seitenansicht einer nach dem Paternoster-Prinzip arbeitenden Gepäckaufbewahrungsvorrichtung gemäß einer Ausführungsform der Erfindung;
- Figur 2: eine schematische perspektivische Teilansicht eines Omnibusses mit einer nach dem Paternoster-Prinzip arbeitenden Gepäckaufbewahrungsvorrichtung im ausgefahrenen Zustand gemäß einer Ausführungsform der Erfindung;
- Figur 3: eine schematische perspektivische Ansicht einer nach dem Paternoster-Prinzip arbeitenden Gepäckaufbewahrungsvorrichtung gemäß einer Ausführungsform der Erfindung;
- Figur 4: ein vergrößerter Ausschnitt eines elektrischen Antriebs der Gepäckaufbewahrungsvorrichtung; und
- Figur 5: eine schematische Vorderansicht einer nach dem Paternoster-Prinzip arbeitenden Gepäckaufbewahrungsvorrichtung gemäß einer Ausführungsform der Erfindung.

Gleiche oder funktional äquivalente Elemente sind in allen Figuren mit denselben Bezugszeichen bezeichnet und zum Teil nicht gesondert beschrieben.

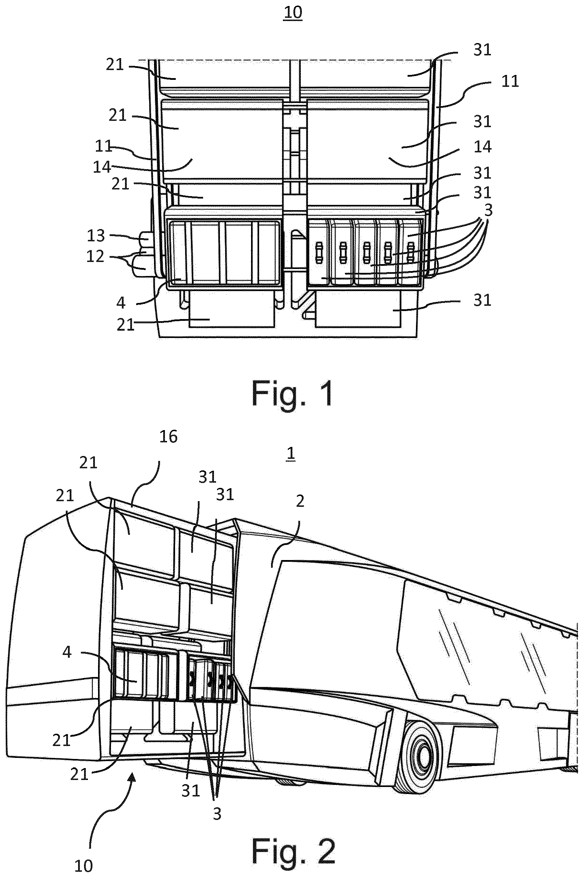

Die Figuren 1, 3 und 5 zeigen in verschiedenen schematischen Ansichten eine nach dem Paternoster-Prinzip arbeitende Gepäckaufbewahrungsvorrichtung 10 gemäß einer Ausführungsform der Erfindung.

Die Gepäckaufbewahrungsvorrichtung 10 ist als Umlauf-Lift ausgeführt, mit mehreren entlang einer Umlaufbahn geführten Gepäckaufnahmebehältern 21. Die Umlaufbahn ist durch den endlosen, umlaufenden Förderriemen 11 festgelegt, mit welchem die Gepäckaufnahmebehälter 21 entlang der Umlaufbahn im Wesentlichen stets aufrecht stehend geführt sind, d. h. dass der Boden der Gepäckaufnahmebehälter 21 stets im Wesentlichen horizontal bleibt. Die Gepäckaufnahmebehälter 21 sind in Abständen zueinander an über Umlenkrollen 13 geführten, endlosen Förderriemen 11 angeordnet. Der Förderriemen 11 kann als Zahn- oder Keilriemen ausgeführt sein.

Über mehrere Umlenkrollen 12 ist der Förderriemen 11 hier umgekehrt U-förmig ausgebildet, d. h. die vom Förderriemen umschlossene Fläche bildet ein auf dem Kopf stehendes "U" aus. Auf diese Weise kann die Anordnungsdichte der Gepäckaufnahmebehälter 21 erhöht werden, so dass möglichst die gesamte Höhe und Breite des Fahrzeugs ausgenutzt werden kann. Der Umlauf-Lift stützt sich mittig ferner auf einem Stützelement 15 ab.

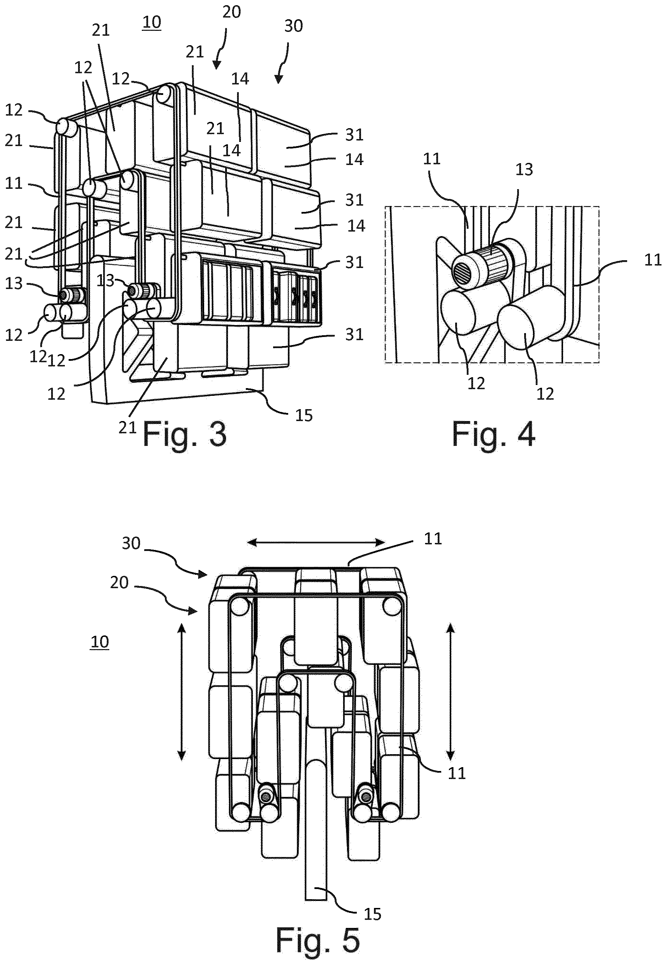

Der Antrieb des Förderriemens erfolgt über zwei Elektromotoren 13. Figur 4 zeigt einen vergrößerten Ausschnitt eines elektrischen Antriebs der Gepäckaufbewahrungsvorrichtung in Form eines Elektromotors 13, der neben zwei Umlenkrollen 12 angeordnet ist.

Wie in den Figuren 1, 3 und 5 ferner erkennbar ist, liegt eine Besonderheit des vorliegenden Ausführungsbeispiels darin, dass der Umlauf-Lift zwei in Fahrzeuglängsrichtung nebeneinander angeordnete Gruppen 20, 30 von Gepäckaufnahmebehältern 21, 31 aufweist.

Zu der ersten Gruppe 20 gehören die mit dem Bezugszeichen 21 gekennzeichneten Gepäckaufnahmebehälter. Zu der zweiten Gruppe 20 gehören die mit dem Bezugszeichen 31 gekennzeichneten Gepäckaufnahmebehälter. Die Gepäckaufnahmebehälter 21 sind an einer Seite an einem ersten wartungsfreien, verstärkten Förderriemen 11 verschwenkbar gehaltert und an der gegenüberliegenden Seite jeweils an einem Gepäckaufnahmebehälter 31 der zweiten Gruppe 30 befestigt. Die Gepäckaufnahmebehälter 31 sind an ihrer der ersten Gruppe 20 abgewandten Seite ebenfalls an einem zweiten wartungsfreien, verstärkten Förderriemen 11 schwenkbar gehaltert. Die Gruppen 20 und 30 werden somit synchron befördert. Die Trägerachsen der Umlenkrollen befinden sich auf leichtgängigen Nadellagern. In Figur 5 illustrieren die schwarzen Doppelpfeile die möglichen Transportbewegungen der Gepäckaufnahmebehälter 21, 31. In Figur 5 ist ferner erkennbar, dass der Umlauf-Lift in jeder Gruppe zwölf Gepäckaufnahmebehälter 21 bzw. 31 aufweist, somit insgesamt 24 Gepäckaufnahmebehälter umfasst.

Die Gepäckaufbewahrungsvorrichtung 10 weist Gepäckaufnahmebehälter 21, 31 unterschiedlicher Größe auf. Die Gepäckaufnahmebehälter 21, 31 sind so dimensioniert, dass Gepäckstücke in allen typischen bzw. gängigen Normen aufgenommen werden können - mit Ausnahme von sehr großen und sperrigen Gepäckstücken.

Die Gepäckaufnahmebehälter 21, 31 sind ferner verschließbar ausgeführt. Hierzu sind die Gepäckaufnahmebehälter 21, 31 jeweils mit einem Rollladen 14 aus einem Aluminium-Werkstoff ausgestattet, der zum Verschließen der Gepäckaufnahmebehälter 21, 31 heruntergezogen werden kann.

In den Figuren 1 und 3 sind zwei Gepäckaufnahmebehälter 21, 31 mit geöffneten Rollläden gezeigt. Die zwei Gepäckaufnahmebehälter 21, 31 befinden sich in der Be- und Entladeposition auf der Beifahrerseite. Im rechten geöffneten Gepäckaufnahmebehälter 31 sind mehrere kleinere Koffer 3 untergebracht, während der linke geöffnete Gepäckaufnahmebehälter 21 mit einem großen Koffer 4 beladen ist.

Lediglich beispielhaft können die Maße einer exemplarischen Ausführungsform der Gepäckaufbewahrungsvorrichtung 10 wie folgt ausgeführt sein: Höhe: 2430 mm, Breite: 1800 mm und Länge: 2100mm. Andere Maße sind selbstverständlich möglich. Diese Abmessungen sind vorteilhaft, um die Gepäckaufbewahrungsvorrichtung 10 in einem hinteren Bereich eines Reisebusses 1 zu verbauen und um dort im Wesentlichen die gesamte Breite und Höhe des Omnibusses auszunutzen, was beispielsweise in der Figur 2 dargestellt ist.

Eine weitere Besonderheit der in Figur 2 dargestellten Ausführungsvariante ist, dass die Gepäckaufbewahrungsvorrichtung 10 in Längsrichtung des Omnibusses 1 verfahrbar ausgeführt ist und zum Be- und Entladen mit Gepäckstücken aus dem hinteren Endbereich der Karosserie ausfahrbar ist. Figur 2 zeigt die Gepäckaufbewahrungsvorrichtung 10 im ausgefahrenen Zustand, in dem die Gepäckaufbewahrungsvorrichtung 10 aus dem hinteren Ende der Fahrzeugseitenwand 2 herausragt und in dem ein sicheres Be- und Entladen von der Gehsteigseite aus ermöglicht wird. Zur Realisierung des Ausfahrmechanismus weist die Gepäckaufbewahrungsvorrichtung 10 einen Halterahmen 16 auf, in dem der Umlauf-Lift gehaltert ist. Der Halterahmen ist mittels einer zweckmäßig ausgeführten Führungsmechanik linear zum Fahrzeug verfahrbar und über einen elektrischen Antrieb in Längsrichtung des Omnibusses ein- und ausfahrbar ausgeführt.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Omnibus
- 2: Fahrzeugseitenwand
- 3: Koffer (klein)
- 4: Koffer (groß)
- 10: Gepäckaufbewahrungsvorrichtung
- 11: Förderriemen
- 12: Umlenkrolle
- 13: Elektromotor
- 14: Rollladen
- 15: Stützelement
- 16: Halterahmen
- 20: Erste Gruppe von Gepäckaufnahmebehältern
- 21: Gepäckaufnahmebehälter
- 30: Zweite Gruppe von Gepäckaufnahmebehältern
- 31: Gepäckaufnahmebehälter

## Patentansprüche

1. Omnibus (1), umfassend eine Gepäckaufbewahrungsvorrichtung (10), die als Umlauf-Lift ausgeführt ist, mit mehreren entlang einer Umlaufbahn geführten Gepäckaufnahmebehältern (21, 31), **dadurch gekennzeichnet, dass**
a) die Gepäckaufbewahrungsvorrichtung (10) in Längsrichtung des Omnibusses verfahrbar ausgeführt ist und zum Be- und Entladen mit Gepäckstücken aus dem hinteren Endbereich der Karosserie ausfahrbar ist, oder
b) an einer Längsseitenwand des Omnibusses im Bereich der Gepäckaufbewahrungsvorrichtung eine Abdeckeinrichtung vorgesehen ist, die in einen geöffneten Zustand und einen verschlossenen Zustand bringbar ist und die im geöffnetem Zustand den Zugang zu einem Teil der Gepäckaufnahmebehälter der Gepäckaufbewahrungsvorrichtung freigibt.

2. Omnibus (1) nach Anspruch 1, wobei die Gepäckaufbewahrungsvorrichtung (10) ein endloses, umlaufendes Fördermittel aufweist, mit welchem die Gepäckaufnahmebehälter (21, 31) entlang der Umlaufbahn geführt sind, insbesondere im Wesentlichen stets aufrecht stehend geführt sind.

3. Omnibus (1) nach einem der vorherigen Ansprüche, wobei die Gepäckaufbewahrungsvorrichtung (10) Gepäckaufnahmebehälter (21, 31) unterschiedlicher Größe aufweist.

4. Omnibus (1) nach einem der vorherigen Ansprüche, wobei die Gepäckaufnahmebehälter (21, 31) verschließbar ausgeführt sind.

5. Omnibus (1) nach Anspruch 4, wobei die Gepäckaufnahmebehälter (21, 31) zum Verschließen einen Rollladen (14) oder einen Jalousieverschluss aufweisen.

6. Omnibus (1) nach Anspruch 5, wobei die Gepäckaufbewahrungsvorrichtung (10) an einem hinteren Endbereich des Omnibusses (1) angeordnet ist.

7. Omnibus (1) nach Anspruch 6, wobei die Umlaufbahn im Bereich einer Längsseitenwand (2), insbesondere im Bereich der Längsseitenwand der Beifahrerseite, mindestens teilweise im Wesentlichen Vertikal geführt ist.

8. Omnibus (1)nach einem der vorhergehenden Ansprüche, wobei die Umlaufbahn U-förmig oder umgekehrt U-förmig ausgebildet ist.

9. Omnibus (1) nach einem der vorherigen Ansprüche, wobei die Gepäckaufbewahrungsvorrichtung (10)
a) zwei Umlauf-Lifte mit jeweils mehreren entlang einer Umlaufbahn geführten Gepäckaufnahmebehältern aufweist; und/oder
b) eine erste Gruppe (20) von entlang einer ersten Umlaufbahn geführten Gepäckaufnahmebehältern (21) und eine zweite Gruppe (30) von entlang einer zweiten Umlaufbahn geführten Gepäckaufnahmebehältern (31) aufweist, wobei die erste Umlaufbahn zur zweiten Umlaufbahn in Fahrzeuglängsrichtung verschoben, insbesondere parallelverschoben ist.

10. Omnibus (1) nach einem der vorherigen Ansprüche,
a) wobei das endlos umlaufende Fördermittel als Zahn- oder Keilriemen (11) ausgeführt ist; und/oder
b) wobei der Umlauf-Lift elektrisch angetrieben ist.

11. Omnibus (1) nach einem der vorherigen Ansprüche, wobei zumindest ein Teil der Gepäckaufnahmebehälter eine Beschriftung (13) aufweist, die eine Zuordnung des Gepäckaufnahmebehälters zu einem Sitzplatz, einer Sitzplatzgruppe, einem Zielort und/oder einem Passagier ermöglicht.

12. Omnibus (1) nach Anspruch 11, wobei die Beschriftung eine alphanumerische Codierung und/oder Bezeichnung eines Sitzplatzes, einer Sitzplatzgruppe, eines Zielorts und/oder eines Passagiernamens enthält.

## Claims

1. An omnibus (1) comprising a baggage storage device (10) which is embodied as a revolving lift, having a plurality of baggage receptacle containers (21, 31) which are guided along a revolving track, **characterized in that**
a) the baggage storage device (10) is embodied so as to be repositionable in the longitudinal direction of the omnibus and for loading and unloading pieces of baggage is able to be deployed from the rear end region of the bodywork; or
b) a cover installation which is able to be moved to an opened state and a closed state and which in the opened state clears the access to part of the baggage receptacle containers of the baggage storage device is provided in a region of the baggage storage device on a longitudinal lateral wall of the omnibus.

2. The omnibus (1) according to Claim 1, wherein the baggage storage device (10) has an endless revolving conveying means by way of which the baggage receptacle containers (21, 31) are guided along the revolving track, in particular are guided so as to be substantially upright at all times.

3. The omnibus (1) according to one of the preceding claims, wherein the baggage storage device (10) has baggage receptacle containers (21, 31) of dissimilar sizes.

4. The omnibus (1) according to one of the preceding claims, wherein the storage receptacle containers (21, 31) are embodied so as to be lockable.

5. The omnibus (1) according to Claim 4, wherein the baggage receptacle container (21, 31) for locking have a roller shutter (14) or a louvre closure.

6. The omnibus (1) according to Claim 5, wherein the baggage storage device (10) is disposed on a rear end region of the omnibus (1).

7. The omnibus (1) according to Claim 6, wherein the revolving track in the region of a longitudinal lateral wall (2), in particular in the region of the longitudinal lateral wall of the kerbside, is guided so as to be at least in part substantially vertical.

8. The omnibus (1) according to one of the preceding claims, wherein the revolving track is configured so as to be in the shape of a U or an inverse U.

9. The omnibus (1) according to one of the preceding claims, wherein the baggage storage device (10)
a) has two revolving lifts having in each case a plurality of baggage receptacle containers which are guided along a revolving track; and/or
b) has a first group (20) of baggage receptacle containers (21) which are guided along a first revolving track, and a second group (30) of baggage receptacle containers (31) which are guided along a second revolving track, wherein the first revolving track is displaced, in particular displaced in a parallel manner, in the longitudinal direction of the vehicle, in relation to the second revolving track.

10. The omnibus (1) according to one of the preceding claims,
a) wherein the endless revolving conveying means is embodied as a timing belt or a V-belt (11); and/or
b) wherein the revolving lift is electrically driven.

11. The omnibus (1) according to one of the preceding claims, wherein at least some of the baggage receptacle containers have a signage (13) which enables the respective baggage receptacle container to be assigned to a seat, a group of seats, a destination, and/or a passenger.

12. The omnibus (1) according to Claim 11, wherein the signage contains an alphanumeric code and/or a designation of a seat, a group of seats, a destination, and/or a passenger name.

## Revendications

1. Autobus (1), comprenant un arrangement de stockage de bagages (10) qui est réalisé sous la forme d'un élévateur circulaire comprenant plusieurs récipients d'accueil de bagage (21, 31) guidés le long d'une trajectoire circulaire, **caractérisé en ce que** a) l'arrangement de stockage de bagages (10) est réalisé de manière à pouvoir être déplacé dans la direction longitudinale de l'autobus, et peut être sorti hors de la zone arrière de la carrosserie en vue de charger et de décharger des pièces de bagage, ou b) un dispositif de recouvrement se trouve au niveau d'une paroi latérale longue de l'autobus, dans la zone de l'arrangement de stockage de bagages, lequel peut être amené dans un état ouvert et dans un état fermé et qui, dans l'état ouvert, libère l'accès à une partie des récipients d'accueil de bagage de l'arrangement de stockage de bagages.

2. Autobus (1) selon la revendication 1, l'arrangement de stockage de bagages (10) possédant un moyen de transport circulaire sans fin avec lequel les récipients d'accueil de bagage (21, 31) sont guidés le long d'une trajectoire circulaire, notamment guidés toujours sensiblement dressés verticalement.

3. Autobus (1) selon l'une des revendications précédentes, l'arrangement de stockage de bagages (10) possédant des récipients d'accueil de bagage (21, 31) de différentes tailles.

4. Autobus (1) selon l'une des revendications précédentes, les récipients d'accueil de bagage (21, 31) étant réalisés de manière à pouvoir être fermés.

5. Autobus (1) selon la revendication 4, les récipients d'accueil de bagage (21, 31) possédant un volet roulant (14) ou une fermeture par store pour la fermeture.

6. Autobus (1) selon la revendication 5, l'arrangement de stockage de bagages (10) étant disposé au niveau d'une zone d'extrémité arrière de l'autobus (1).

7. Autobus (1) selon la revendication 6, la trajectoire circulaire étant guidée dans la zone d'une paroi latérale longue (2), notamment dans la zone de la paroi latérale longue du côté du conducteur, au moins partiellement sensiblement verticalement.

8. Autobus (1) selon l'une des revendications précédentes, la trajectoire circulaire étant réalisée en forme de U ou en forme de U retourné.

9. Autobus (1) selon l'une des revendications précédentes, l'arrangement de stockage de bagages (10)
a) possédant deux élévateurs circulaires comportant respectivement plusieurs récipients d'accueil de bagage guidés le long d'une trajectoire circulaire ; et/ou
b) possédant un premier groupe (20) de récipients d'accueil de bagage (21) guidés le long d'une première trajectoire circulaire et un deuxième groupe (30) de récipients d'accueil de bagage (31) guidés le long d'une deuxième trajectoire circulaire, la première trajectoire circulaire étant décalée, notamment décalée en parallèle, par rapport à la deuxième trajectoire circulaire.

10. Autobus (1) selon l'une des revendications précédentes,
a) le moyen de transport circulaire sans fin étant réalisé sous la forme d'une courroie crantée ou trapézoïdale (11) ; et/ou
b) l'élévateur circulaire étant entraîné électriquement.

11. Autobus (1) selon l'une des revendications précédentes, au moins une partie des récipients d'accueil de bagage possédant un marquage (13) qui permet une affectation du récipient d'accueil de bagage à une place assise, à un groupe de places assises, à une destination et/ou à un passager.

12. Autobus (1) selon la revendication 11, le marquage contenant un codage alphanumérique et/ou une désignation d'une place assise, d'un groupe de places assises, d'une destination et/ou d'un nom de passager.
